# EUROPEAN PATENT SPECIFICATION

(11) **EP 1 628 295 B1**
(45) Date of publication and mention of the grant of the patent: **25.07.2007**
(21) Application number: 05025810.2
(22) Date of filing: 13.08.2003
(51) Int. Cl.: G11B 7/085, G11B 19/20, G11B 19/24

(54) **Optical disc apparatus**
Optisches Platten-Lesegerät
Appareil pour disque optique

(30) Priority: 30.08.2002 JP 2002254335
(43) Date of publication of application: 22.02.2006
(62) Divisional of application: 03791211.0
(73) Proprietor: MATSUSHITA ELECTRIC INDUSTRIAL CO., LTD, Kadoma-shi, Osaka 571-8501 (JP)
(72) Inventor: Maruyama, Tooru, Ibaraki-shi Osaka, 567-0868 (JP); Kishimoto, Takashi, Nara-shi Nara, 631-0072 (JP); Fujiune, Kenji, Matsushita Electr. Ind. Co., Ltd., Chuo-ku, Osaka-shi, Osaka 540-6319 (JP); Watanabe, Katsuya, Nara-shi Nara 631-0033 (JP)
(74) Representative: Balsters, Robert

(56) References cited:
- US-A- 5 254 920
- US-B1- 6 172 946
- PATENT ABSTRACTS OF JAPAN vol. 2000, no. 09, 13 October 2000 (2000-10-13) -& JP 2000 173167 A (FUNAI ELECTRIC CO LTD), 23 June 2000 (2000-06-23)

## Description

### Technical Field

This present invention relates to an optical disc apparatus for reading out data from an optical disc such as a Compact Disc (CD) or a Digital Versatile Disc (DVD).

### Background Art

An optical disc apparatus for reading out data from an optical disc such as a CD and a DVD.

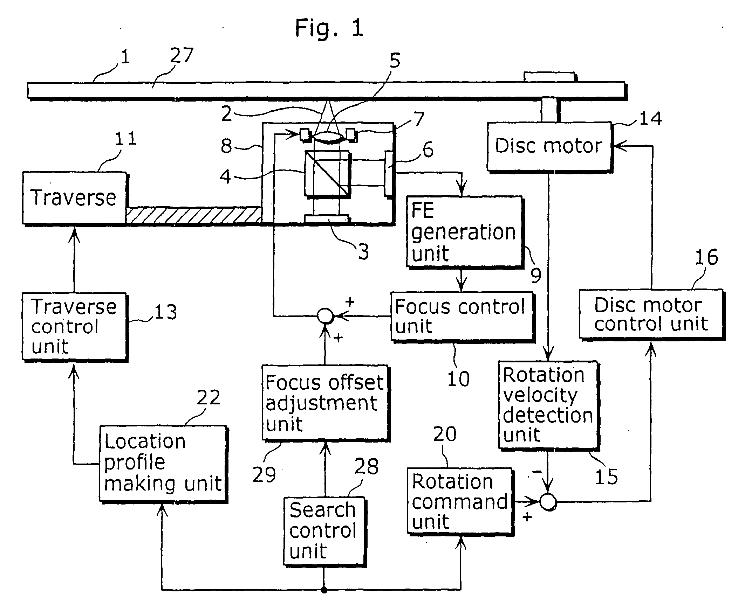

Fig. 1 is a structural diagram showing the structure of the above-mentioned conventional optical disc apparatus.

The conventional optical disc apparatus comprises an optical head 8, a traverse 11, a traverse control unit 13, a location profile making unit 22, an FE generation unit 9, a focus control unit 10, a focus offset adjustment unit 29, a search control unit 28, a rotation command unit 20, a disc motor control 14, a rotation speed detection unit 15, a disc motor control unit 16.

The optical head 8 is for irradiating converged optical beam 2 on an optical disc 1, and comprises an optical beam irradiation unit 3 that outputs the optical beam 2, a beam splitter 4 that allows the optical beam 2 to pass through and reflects the optical beam 2, a convergence lens 5 that converges the optical beam 2, a focus actuator 7 that moves the focus of the optical beam 2 converged after passing through the convergence lens 5 by driving convergence lens 5, and a photo detector 6 that outputs an optical detection signal corresponding to the detection result after detecting the optical beam 2.

The optical beam 2 outputted from an optical beam irradiation unit 3 passes through the beam splitter 4 and is converged on the optical disc 1 by the convergence lens 5. Also, optical beam 2 reflected by the optical disc 1 passes through the convergence lens 5 and is irradiated to the photo detector 6 by a beam splitter 4.

The traverse 11 changes the irradiation point (an optical beam spot), on the optical disc 1, of the optical beam 2 outputted from the optical head 8 by moving the optical head 8 to the radius direction of the optical disc 1. The disc motor 14 rotates the optical disc 1, generates a frequency signal showing the rotation frequency and outputs the frequency signal to the rotation velocity detection unit 15.

The rotation velocity detection unit 15 detects rotation velocity of the optical disc 1 based on the frequency signal of the disc motor 14 and outputs rotation velocity information showing the rotation velocity.

The search control unit 28 outputs search target radius location information showing the target radius location to the location profile making unit 22 and the rotation command unit 20 so as to perform a search operation for moving the optical beam spot to the targeted radius point (a target radius point) on the optical disc 1. Also, the search control unit 28 notifies the timings of the start and the end of the search of the focus offset adjustment unit 29.

The location profile making unit 22 makes a location profile showing the relation between the radius point of the optical beam spot and the moving time based on the search target radius location information obtained from the search control unit 28.

The traverse control unit 13 outputs a traverse drive signal for driving the traverse 11 so as to move the optical beam spot according to the location profile made by the location profile making unit 22.

The rotation command unit 20 conducts the target rotation velocity of the optical disc 1 based on the search target radius location information obtained from the search control unit 28 and outputs the target rotation velocity information showing the target rotation velocity to the disc motor control unit 16.

The disc motor control unit 16 outputs a motor drive signal for driving the disc motor 14 so as to be stable the rotation velocity of the optical disc 1 to the target rotation velocity based on the rotation velocity information from the rotation velocity detection unit 15 and the target rotation velocity information from the rotation instruction unit 20.

The FE generation unit 9 generates an FE signal showing the location gap in the normal direction on the optical disc information recording surface 27 between the focus of the optical beam 2 converged from the convergence lens 5 and the optical disc information recording surface 27 of the optical disc 1, and outputs the FE signal to the focus control unit 10.

The focus control unit 10 outputs a focus control signal for controlling feedback of the focus actuator 7 so as to rightly set the focus of the optical beam 2 on the optical disc information recording surface 27 based on the FE signal outputted from the FE generation unit 9.

The focus offset adjustment unit 29 applies an offset signal to the focus control signal outputted from the focus control unit 10 according to the timing notified by the search control unit 28 during the time from the start to the end of the search.

When reading out information from the optical disc 1 using this kind of optical disc apparatus, the traverse 11 and the disc motor 14 are controlled so as to maintain the linear velocity of the optical beam spot in the arbitrary radius location on the optical disc 1. Further, when the search operation of moving the optical beam spot to the target radius location on the optical disc 1 is performed, a location profile indicating the target radius location is made by the location profile making unit 22 first, the traverse 11 is driven so as to move the optical beam spot according to the made location profile, and the rotation velocity of the optical disc 1 is changed during the moving so as to satisfy the requirement for maintaining the linear velocity.

By the way, the phase change method is a representative example of recording methods on the optical disc 1. Information is recorded by increasing the irradiation power of the optical beam 2 in the optical beam irradiation unit 3, increasing the temperature on the optical disc information recording surface 27 up to a certain temperature and transforming the composition of the optical disc information recording surface 27 in this phase change method.

However, even in the condition where the optical beam 2 (reproduced beam) whose irradiation power is relatively weak is irradiated from the optical head 8 without recording the data to the optical disc 1, when the linear velocity of the optical beam spot that scans tracks on the optical disc 1 decreases to the permissible linear velocity or below at the time of moving the optical head 8, the temperature of the part where the optical beam 2 is irradiated, signal jitters on the optical disc 1 increases and in the worst case, the recorded data is lost. This phenomenon is called reproduced beam deterioration.

Therefore, the focus offset adjustment unit 29 in the conventional optical disc apparatus outputs an offset signal mentioned above so as to avoid this reproduced beam deterioration.

The focus actuator 7 drives the convergence lens 5 to the direction of the normal of the optical disc information recording surface 27 by the length according to the offset signal under the condition of the optical beam 2 being focused on the optical disc information recording surface 27 of the optical disc 1 so as to obtain a focus control signal on which an offset signal is applied from the focus control unit 10 when an offset signal is outputted in this way.

As the result, the surface of the optical beam spot on the optical disc information recording surface 27 becomes bigger compared with the surface of the optical beam spot on the optical disc information recording surface 27 under the condition where an offset signal is not outputted and the heat that is received by the optical disc 1 is dispersed. In this way, the temperature rising because of the deceleration of the linear velocity mentioned above decreases, and reproduced beam deterioration is avoided.

An offset signal is applied on the focus control signal from the focus control unit 10 so as to avoid reproduced beam deterioration in the conventional optical disc apparatus, however, there may occur a problem that it is impossible to fully avoid reproduced beam deterioration because the focus point of the optical beam 2 matches on the optical disc information recording surface 27.

Further, the above-mentioned conventional optical disc apparatus has another problem explained below.

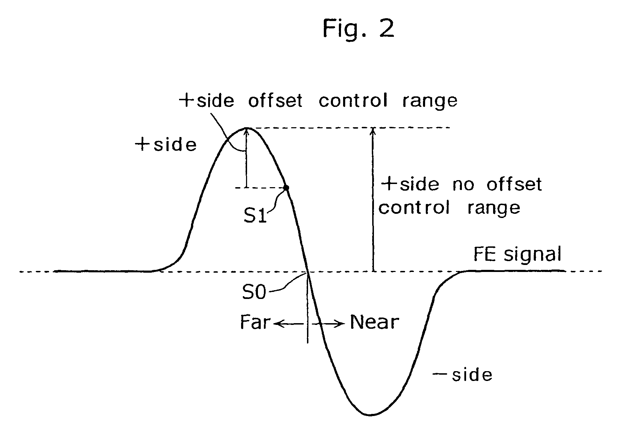

Fig. 2 is an illustration for explaining another problem of the conventional optical disc apparatus.

An FE signal outputted from the FE generation unit 9 is outputted in the plus side when the focus of the optical beam 2 is more distant than the optical disc information recording surface 27, while the signal is outputted in the minus side when the focus is nearer than the optical disc information recording surface 27.

In other words, the focus control unit 10 outputs a focus control signal so that the FE signal maintains the value shown at point S0 so as to put the focus of the optical beam 2 on the optical disc information recording surface 27. That is, the focus control unit 10 judges that the focus is more distant than the optical disc information recording surface 27 and outputs the focus control signal that makes the focus nearer to the optical disc information recording surface 27 when the FE signal is outputted in the plus side relative to point S0, while the focus control unit 10 judges that the focus is too close to the optical disc information recording surface 27 and outputs the focus control signal making the focus more distant from the optical disc information recording surface 27 when the FE signal is outputted in the minus side.

Here, an offset signal is outputted from the focus offset adjustment unit 29, focus location is controlled so that the FE signal maintains the value shown at point S1.

However, when the offset signal is outputted in this way, the control range in the plus side of the FE signal becomes narrower compared with the control range when the offset signal is not outputted, the focus location moves away by vibration of the traverse mechanism during the search and then the FE signal goes beyond the peak of the FE signal, and there is a problem that the focus location control comes off. Also, there is a problem that the focus location control is easy to come off because a channel traverse signal that generates when the optical beam spot traverses the track gets into the FE signal.

Further, when the control range including plus side and minus side of the FE signal is narrow, the offset amount can be applied is limited, optical beam spot cannot be fully enlarged even when the offset signal is applied, thus there occurs a problem that it is impossible to avoid reproduced beam deterioration.

Therefore, this present invention is achieved considering those problems mentioned above, which aims at providing an optical disc apparatus with improved prevention effect of reproduced beam deterioration.

### Disclosure of Invention

In order to achieve the above-mentioned purpose, the optical disc apparatus concerning this present invention is for reading out information recorded on an optical disc by irradiating an optical beam on the optical disc, comprises: a focus adjustment unit operable to adjust a focus of the optical beam so that the focus is formed on the optical disc; a rotation unit operable to rotate the optical disc; a moving unit operable to move a spot where the optical beam is irradiated on the optical disc in a radius direction of the optical disc; a linear velocity detection unit operable to detect a linear velocity of the spot; a rotation control unit operable to control the rotation unit so that the linear velocity detected by the linear velocity detection unit remains substantially constant on an arbitrary radius location on the optical disc, when information recorded on the optical disc is read out; and a a forms adjustment stop unit operable to stop a forms adjustment made by the focus adjustment unit in the case where the linear velocity detected by the linear velocity detection unit decreases to a predetermined linear velocity or below, when the moving unit moves the spot.

US 6172946 B discloses an optical disc apparatus reflecting the preamble of the appended claim 1.

### Brief Description of Drawings

These and other objects, advantages and features of the invention will become apparent from the following description thereof taken in conjunction with the accompanying drawings that illustrate a specific embodiment of the invention. In the Drawings:
Fig. 1 is a structural diagram showing the structure of the conventional optical disc apparatus.
Fig. 2 is an illustration explaining the problem of the above-mentioned optical disc apparatus.
Fig. 3 is a structural diagram showing the structure of the optical disc apparatus.
Fig. 4 is a profile indication diagram showing an example of a location profile to be a basic when a search is performed from the inner radius to the outer radius of the optical disc.
Fig. 5 is a profile indication diagram showing an example of a location profile to be a basic when a search is performed from the outer radius to the inner radius of the optical disc.
Fig. 6 is an illustration explaining the relation between the velocity profile and the location profile.
Fig. 7 is a property diagram showing the adjusted location profile and the linear velocity of the optical beam spot based on the adjusted location profile when a search is performed from the inner radius to the outer radius of the optical disc.
Fig. 8 is a property diagram showing the adjusted location profile and the linear velocity of the optical beam spot based on the adjusted location profile when a search is performed from the outer radius to the inner radius of the optical disc.
Fig. 9 is a flow chart showing the operation of the optical disc apparatus.
Fig. 10 is an illustration explaining the relation between the traverse gain and the location profile or the velocity profile.
Fig. 11 is a structural diagram showing the structure of the optical disc apparatus concerning the variation example.
Fig. 12 is an illustration explaining the specifications of the CD, a DVD and a BD.
Fig. 13 is a waveform diagram showing the waveform of the FE signal outputted when the convergence lens is moved.
Fig. 14 is a property diagram showing the linear velocity of the optical beam spot based on the location profile when a search is performed from the outer radius to the inner radius of the optical disc.
Fig. 15 is an illustration explaining how the location profile is adjusted on the BD.
Fig. 16 is an illustration explaining how the location profile is adjusted on the CD as mentioned above.
Fig. 17 is a section view of the optical disc.
Fig. 18 is a structural diagram showing the structure of the optical disc apparatus.
Fig. 19 is a property diagram when a search is performed from the inner radius to the outer radius of the optical disc.
Fig. 20 is a property diagram when a search is performed from the outer radius to the inner radius of the optical disc.
Fig. 21 is a flow chart showing the operation of the optical disc apparatus.
Fig. 22 is a structural diagram showing the structure of the optical disc apparatus according to the present invention.
Fig. 23 is an illustration explaining how the surface of the optical beam spot is changed.
Fig. 24 is a flow chart showing the operation of the optical disc apparatus.

### Best Mode for Carrying Out the Invention

### (First Example)

The optical disc apparatus in a first example will be explained below with reference to figures.

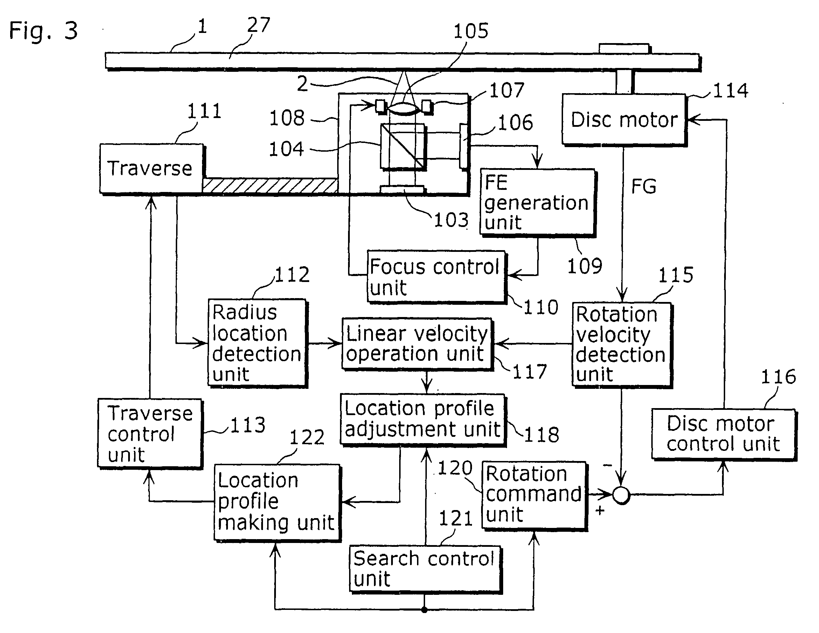

Fig. 3 is a structural diagram showing the structure of the optical disc apparatus in the first example.

This optical disc apparatus is improved in a prevention effect of reproduced beam deterioration by controlling the moving velocity of the radius direction of the optical beam spot on the optical disc, and comprises an optical head 108, a traverse 111, a traverse control unit 113, a location profile making unit 122, an FE generation unit 109, a focus control unit 110, a search control unit 121, a rotation command unit 120, a disc motor 114, a rotation speed detection unit 115, a disc motor control unit 116, a radius location detection unit 112, a linear velocity operation unit 117, a location profile adjustment unit 118. Also, this optical disc apparatus controls the traverse 111 and the disc motor 114 so as to maintain the linear velocity of the optical beam spot in the arbitrary radius location on the optical disc 1 when reading out information from the optical disc 1.

The optical head 108, like the conventional optical head 8, is for irradiating the converged optical beam 2 on the optical disc 1, and the optical head 108 comprises an optical beam irradiation unit 103 that outputs the optical beam 2, a beam splitter 104 that allows the optical beam 2 to pass through and reflects the optical beam 2, a convergence lens 105 that converges the optical beam 2, a focus actuator 107 moves the focus of the converged optical beam 2 that is converged after passing through the convergence lens 105 by driving the convergence lens 105, and a photo detector 106 that detects the optical beam 2 and outputs an optical detection signal corresponding to the detection result.

The optical beam 2 outputted from the optical beam irradiation unit 103 passes through the beam splitter 104 and is converged on the optical disc 1 by passing through the convergence lens 105. Also, the optical beam 2 reflected on the optical disc 1 passes the convergence lens 105 through and irradiated on the photo detector 106 by the beam splitter 104.

The FE generation unit 109 generates an FE signal showing the location gap in the direction of the normal of the optical disc information recording surface 27 between the focus of the optical beam 2 converged by the convergence lens 105 and the optical disc information recording surface 27 of the optical disc 1 based on the optical detection signal from the photo detector 106, and outputs the FE signal to the focus control unit 110.

The focus control unit 110 outputs the focus control signal for controlling the feedback of the focus actuator 107 so as to correctly put the focus of the optical beam 2 on the optical disc information recording surface 27 based on the FE signal outputted from the FE generation unit 109.

The traverse 111 changes the irradiation part (the location of the optical beam spot) of the optical beam 2 on the optical disc 1 outputted from the optical head 108 by moving the optical head 108 to the radius direction of the optical disc 1 based on the traverse drive signal from the traverse control unit 113. Also, the traverse 111 in the present embodiment outputs the moving signal showing the result when moving the optical beam spot to the arbitrary radius location relative to the location in the most inner radius of the optical disc 1.

The disc motor 114 rotates the optical disc 1 based on the motor drive signal from the disc motor control unit 116 and generates a frequency signal (an FG signal) showing the rotation frequency and outputs this to the rotation velocity detection unit 115.

The search control unit 121 outputs the search target radius location information to the targeted radius location (target radius location) on the optical disc 1 to the location profile making unit 122 and the rotation command unit 120 in order to perform a search operation for moving the optical beam spot.

Also, the search control unit 121 in the present embodiment outputs search radius direction information showing the direction (a search direction) for moving the optical beam spot to the target radius location along the radius direction to the location profile adjustment unit 118.

The rotation command unit 120 derives the target rotation velocity of the optical disc 1 that makes it possible to maintain the linear velocity of the optical beam spot based on the search target radius location information from the search control unit 121 and outputs the target rotation velocity information showing the target rotation velocity. In other words, the rotation command unit 120 derives the target rotation velocity that makes it possible to maintain the linear velocity in the arbitrary radius location on the optical disc 1 when data is read out from the optical disc 1 (when the optical beam spot is not moved to the radius direction). The maintained linear velocity is called a standard linear velocity from here.

The rotation velocity detection unit 115 detects the rotation velocity of the optical disc 1 based on the frequency signal of the disc motor 114 and outputs the rotation velocity information showing the rotation velocity.

The disc motor control unit 116 outputs a motor drive signal that drives the disc motor 114 so as to set the rotation velocity of the optical disc 1 at the target rotation velocity to the disc motor 114 based on the rotation velocity information from the rotation velocity detection unit 115 and the target rotation velocity information from the rotation command unit 20.

The radius location detection unit 112 obtains the moving signal outputted from the traverse 111, detects the radius location of the optical beam spot on the optical disc 1 and outputs the radius location information showing the radius location to the linear velocity operation unit 117.

The linear velocity operation unit 117 calculates the linear velocity of the optical beam spot on the optical disc 1 based on the radius location information from the radius location detection unit 112 and the rotation velocity information from the rotation velocity detection unit 115.

The location profile adjustment unit 118 outputs an adjustment instruction signal instructing the location profile making unit 122 to adjust the location profile in order not to allow the linear velocity to decrease to the value below the predetermined value (a permissible linear velocity) during search execution based on the search radius direction information from the search control unit 121 and the linear velocity information from the linear velocity operation unit 117.

The location profile making unit 122 makes a location profile of the optical beam spot based on the search target radius location information from the search control unit 121 and an adjustment instruction signal from the location profile adjustment unit 118.

In other words, the location profile making unit 122 makes a location profile to be a basic based on search target radius location information from the search control unit 121 and makes an adjustment on the location profile to be a basic based on the adjustment instruction signal from the location profile adjustment unit 118.

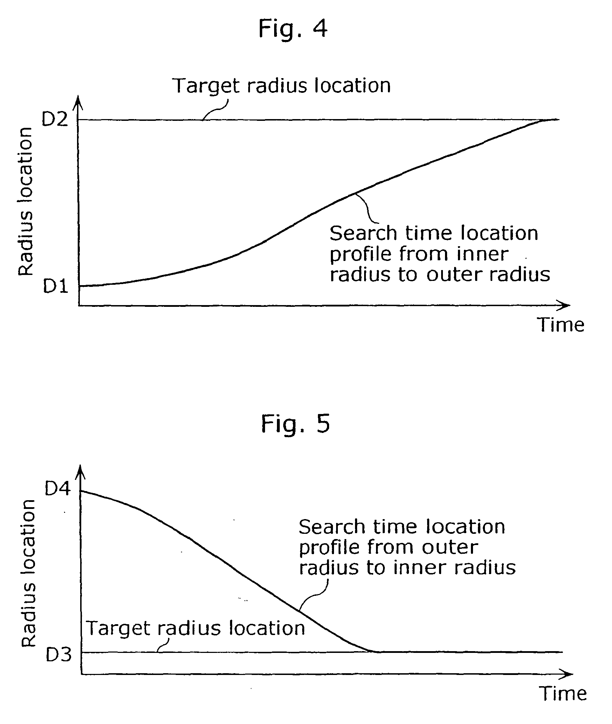

Fig. 4 is a profile indication diagram showing an example of the above-mentioned basic location profile when a search is performed from the inner radius to the outer radius of the optical disc.

When the location profile making unit 122 judges that the target radius location of the optical beam spot is D2 and there is a need to move the optical beam spot from the radius location D1 to the outer radius based on the search target radius location information from the search control unit 121, the location profile making unit 122 starts to move the optical beam spot from the radius location D1 at a certain acceleration, maintains the moving velocity in midstream, and makes a location profile that decreases the moving velocity at a certain rate of acceleration as the optical beam spot nears to the radius location D2.

Fig. 5 is a profile indication diagram showing an example of the above-mentioned basic location profile when a search is performed from the outer radius to the inner radius of the optical disc 1.

When the location profile making unit 122 judges that the target radius location of the optical beam spot is D3 and there is a need to moving the optical beam spot from the radius location D4 to the inner radius based on the search target radius location information from the search control unit 121, the location profile making unit 122 starts to move the optical beam spot from the radius location D4 at a certain acceleration, maintains the moving velocity in midstream, and makes a location profile that decreases the moving velocity at a certain rate of acceleration as the optical beam spot nears to the radius location D3.

To the location profile to be a basic made in this way, the location profile making unit 122 makes adjustment based on the adjustment instruction signal from the location profile adjustment unit 118 and makes a location profile in which the contents shown in the adjustment instruction signal are reflected.

Also, in detail, the location profile making unit 122 makes a location profile like the one mentioned above from the relation between the moving velocity to the radius direction of the optical beam spot and the moving distance (called a velocity profile from here).

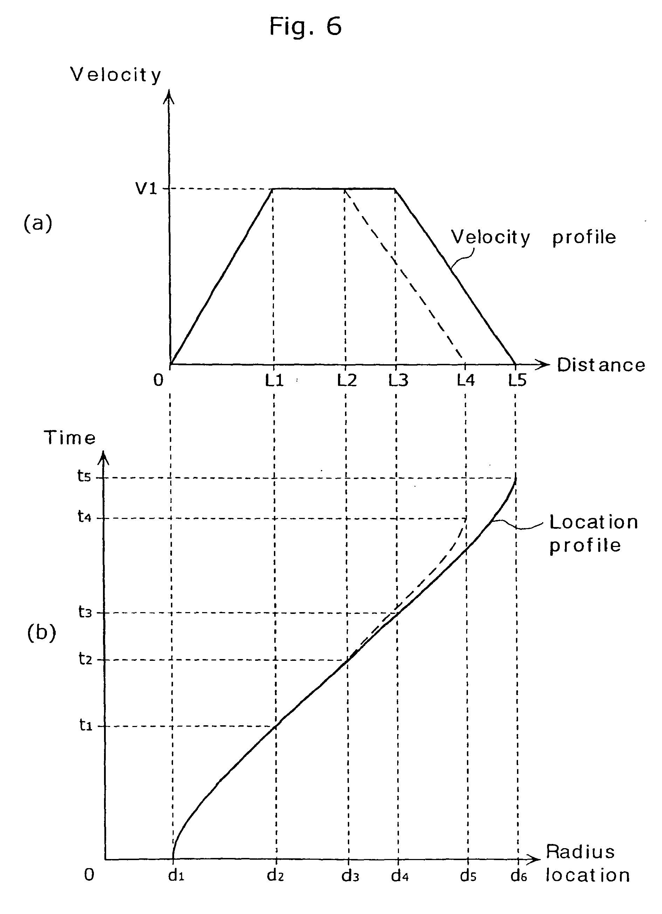

Fig. 6 is an illustration explaining the relation between the velocity profile and the location profile. Fig. 6, in the case of (a), shows the velocity profile and Fig. 6, in the case of (b), shows the location profile.

As shown in (a) of Fig. 6, the location profile making unit 122 makes the velocity profile that makes it possible to gradually increase the moving velocity from the start of moving the optical beam spot, maintain the moving velocity in midstream, and then gradually decrease the moving velocity. As a result, the location profile shown in (b) of Fig. 6 is made.

For example, when the location profile making unit 122 obtains the search target radius information from the search control unit 121 and judges that there is a need to move the optical beam spot by the distance L5 from the search target radius location information, as shown by the solid line in (a) of Fig. 6, the location profile making unit 122 makes the velocity profile that makes it possible to increase the moving velocity at a certain rate of acceleration in the moving segment from the moving starting point of the optical beam spot to distance L1, maintain the moving velocity (velocity V1) from distance L1 to distance L3, and decrease the moving velocity at a certain rate of deceleration in the moving segment from distance L3 to distance L5. As a result, as shown by the solid line in (b) of Fig. 6, the location profile that makes it possible to move the optical beam spot to the target radius location d6 corresponding to distance L5 from radius location d1 from time 0 of the moving starting time to time t5.

Also, when the location profile making unit 122 obtains search target radius location information from the search control unit 121 and judges that there is a need to move the optical beam spot by the distance L4 from the search target radius location information, as shown by the dotted line in (a) of Fig. 6, the location profile making unit 122 makes the velocity profile that makes it possible to increase the moving velocity at a certain rate of acceleration in the moving segment from the moving starting point of the optical beam spot to distance L1, maintain the moving velocity (velocity V1) from distance L1 to distance L2, and decrease the moving velocity at a certain rate of deceleration in the moving segment from distance L2 to distance L4. As a result, as shown by the dotted line in (b) of Fig. 6, the location profile that makes it possible to move the optical beam spot to the target radius location d5 corresponding to distance L4 from radius location d1 from time 0 of the moving starting time to time t4. As a result, as shown by the solid line in (b) of Fig. 6, the location profile that makes it possible to move the optical beam spot to the target radius location d1 corresponding to from radius location d1 to distance L4 from time 0 of the moving starting time to time t4.

After that, the traverse control unit 113 outputs the traverse drive signal that drives the traverse 111 so that the optical beam spot moves along the location profile made by the above-mentioned location profile making unit 122.

Here, the adjustment of the location profile in the present invention will be explained in detail.

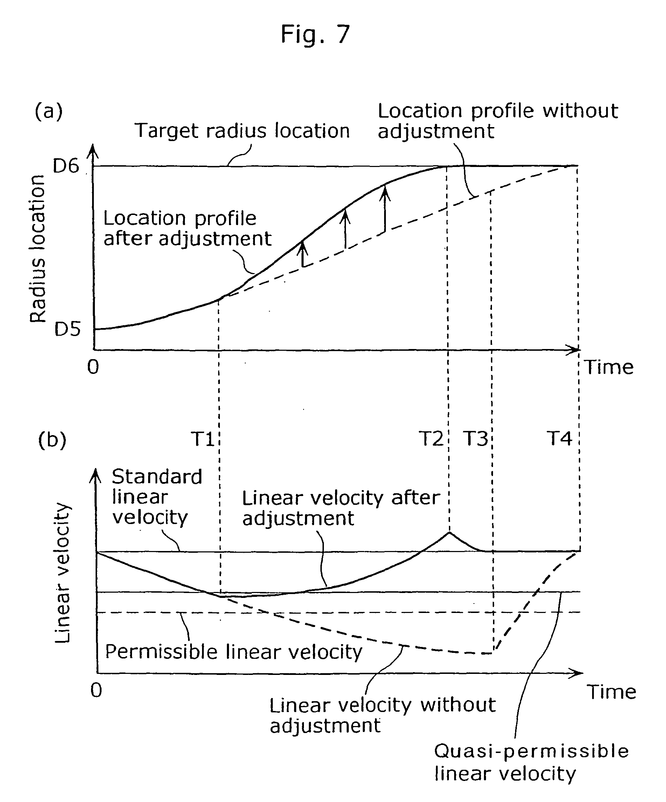

Fig. 7 is a property diagram showing the adjusted location profile and the linear velocity of the optical beam spot based on the adjusted location profile when a search is performed from the inner radius to the outer radius of the optical disc 1.

For example, when moving the optical beam spot from the radius location D5 in the outer radius direction to the target radius location D6, the search control unit 121, the rotation command unit 120, and the disc motor control unit 116 decreases the rotation velocity of the optical disc 1 which is rotated by the disc motor 114 from time 0 of the moving starting time (search starting time) to time T3, and sets the rotation velocity at the rotation velocity corresponding to the target radius location D6 after the time T3 passes.

In the case where the traverse control unit 113 and the traverse 111 moves the optical beam spot from the search starting time to time T4 according to the location profile to be a basic shown by the dotted line in (a) of Fig. 7 instead of moving the optical beam spot according to the adjusted location profile, the linear velocity of the optical beam spot on the optical disc 1 decreases to the permissible linear velocity or below as shown by the dotted line in (b) of Fig. 7. In other words, in this case, reproduced beam deterioration may occur like the conventional example.

However, in this embodiment, the location profile making unit 122 adjusts the location profile as shown by the solid line in (a) of Fig. 7 based on the adjusted command signal from the location profile adjustment unit 118 as to the linear velocity calculated by the linear velocity operation unit 117, and the optical beam spot is moved to the radius direction along the adjusted location profile, the above-mentioned linear velocity is maintained above the permissible linear velocity as shown by the solid line in (b) of Fig. 7, and thus it is possible to avoid reproduced beam deterioration.

In other words, the location profile adjustment unit 118 understands that the linear velocity nears to the permissible linear velocity when the linear velocity decreases to the quasi-permissible linear velocity or below. After that, the location profile adjustment unit 118 adjusts the location profile after time T1 that is the time when the linear velocity decreases to the quasi-permissible linear velocity or below, and instructs the location profile making unit 122 to increase the moving velocity in the radius direction of the optical beam spot. As a result, the linear velocity of the optical beam spot is maintained above the permissible linear velocity even when the rotation velocity of the optical disc 1 decreases, and thus it is possible to avoid reproduced beam deterioration.

The linear velocity increases between time T1 and time T2 because the moving velocity of the optical beam spot in the radius direction increases as shown in (b) of Fig. 7, the optical beam spot stops moving to the radius direction after passing through time T2, and the linear velocity decreases in response to the decrease in the rotation velocity of the optical disc 1 by the disc motor 114. And, the linear velocity is maintained at a standard linear velocity after the optical beam spot passes through time T3 when the rotation velocity of the optical disc 1 is maintained.

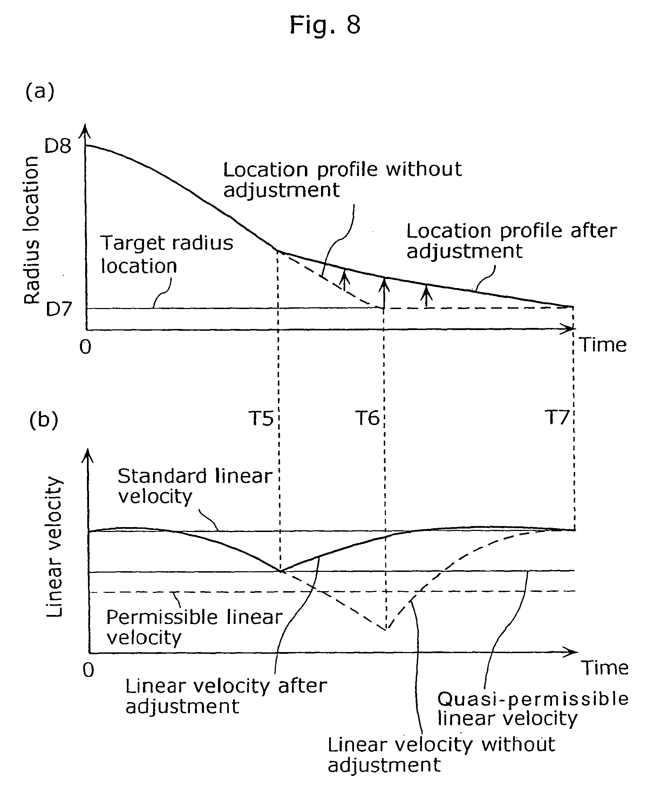

Fig. 8 is a property diagram showing the adjusted location profile and the linear velocity of the optical beam spot based on the adjusted location profile when a search is performed from the outer radius to the inner radius of the optical disc 1.

For example, when moving the optical beam spot from the radius location D8 to the target radius location D7 in the inner radius, the search control unit 121, the rotation command unit 120, and the disc motor control unit 116 increase the rotation velocity of the optical disc 1 which is rotated by the disc motor 14 between time 0 of the moving starting time (the search starting time) and time T7, and the rotation velocity is set at the target rotation velocity for the target radius location D7 when passing time T7.

In the case where the traverse control unit 113 and the traverse 111 moves the optical beam spot to time T6 in the radius direction along the location profile to be basic shown by the dotted line in (a) of Fig. 8 instead of moving the optical beam spot along the adjusted location profile, the disc motor 114 cannot increase the rotation velocity of the optical disc 1 to the rotation velocity for the target radius location D7 by Time 6, in other words it takes until time T7, and the linear velocity of the optical beam spot on the optical disc 1 decreases to the permissible linear velocity or below as shown by the dotted line in (b) of Fig. 8. In other words, in this case, reproduced beam deterioration may occur like the conventional example.

However, in this example, based on an adjusted instruction signal concerning the linear velocity calculated by the linear velocity operation unit 117 from the location profile adjustment unit 118, it is possible to avoid reproduced beam deterioration because the location profile making unit 122 adjusts the location profile as shown by the solid line in (a) of Fig. 8, the optical beam spot is moved to the radius direction along the adjusted location profile, and the above-mentioned linear velocity is maintained above the permissible linear velocity as shown by the solid line in (b) of Fig. 8.

In other words, the location profile adjustment unit 118 understands that the linear velocity nears to the permissible linear velocity when the linear velocity decreases to the quasi-linear velocity or below. And the location profile adjustment unit 118 adjusts the location profile after time T5 when the linear velocity decreases to the quasi-permissible linear velocity or below, and instructs the location profile making unit 122 to decelerate the moving velocity of the optical beam spot in the radius direction. As a result, the linear velocity of the optical beam spot is maintained above the permissible linear velocity even when the rotation velocity of the optical disc 1 does not increase enough and reproduced beam deterioration can be avoided.

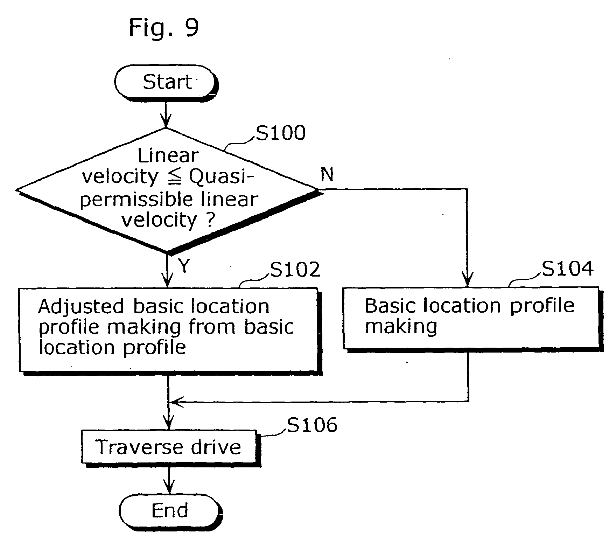

The characteristic operation of the optical disc apparatus in this example will be explained with reference to Fig. 9.

Fig. 9 is a flow chart showing the operation of the optical disc apparatus in this example. First, the optical disc apparatus judges whether the linear velocity is less than the quasi-permissible linear velocity (step S100). And, when the linear velocity is judged to be not more than the quasi-permissible linear velocity (step S100 Y), the optical disc apparatus makes a basic location profile and adjusts the location profile (step S102).

On the other hand, when the linear velocity is judged to be not less than the quasi-permissible linear velocity (step S100 N), the optical disc apparatus makes a basic location profile (step S104).

And, the optical disc apparatus moves the optical head 108 from the traverse 111, and moves the optical beam spot to the radius direction of the optical disc 1 according to the location profile made as mentioned above (step S106).

In this way, reproduced beam deterioration is avoided by adjusting the location profile instead of avoiding reproduced beam deterioration by adjusting the focus of the optical beam 2 like the conventional example in this embodiment, and thus it is possible to avoid the difficulty in controlling the focus location, completely avoid reproduced beam deterioration without being limited to the output range of the FE signal as well as avoiding reproduced beam deterioration even when some vibration is added to the traverse mechanism during search. Also, in this embodiment, it is possible to search without causing reproduced beam deterioration because the moving velocity of the optical beam spot in the search direction is adjusted when a search is performed from the outer radius to the inner radius even when the acceleration of the disc motor 114, for maintaining the linear velocity at the standard linear velocity, is slow.

In this example, the location profile making unit 122 adjusts the location profile based on the instruction of the location profile adjustment unit 118, the traverse control unit 113 drives the traverse 111 so as to move the optical beam spot along the location profile, but the traverse control unit 113 can adjust the traverse gain without adjusting the location profile.

In other words, the traverse control unit 113 obtains the linear velocity calculated by the linear velocity operation unit 117 and performs processing, for example, increasing or decreasing a signal (an adjustment of the traverse gain) on the traverse drive signal outputted to the traverse 111 so as to prevent the linear velocity from decelerating to the permissible linear velocity or below. The traverse 111 changes the moving velocity (of the optical disc 1 to the inward or the outward in the radius direction) of the optical beam spot, that is, the optical head 108 in the search direction based on the traverse drive signal.

For example, the traverse control unit 113 adjusts the traverse gain low and decelerates the moving velocity to the search target radius location of the optical beam spot when a search is performed from the outer radius to the inner radius, or adjusts the traverse gain high and accelerates the moving velocity to the search target radius location of the optical beam spot when a search is performed from the inner radius to the outer radius.

Adjusting the traverse gain like this has the effect equal to the adjusting the location profile and the velocity profile.

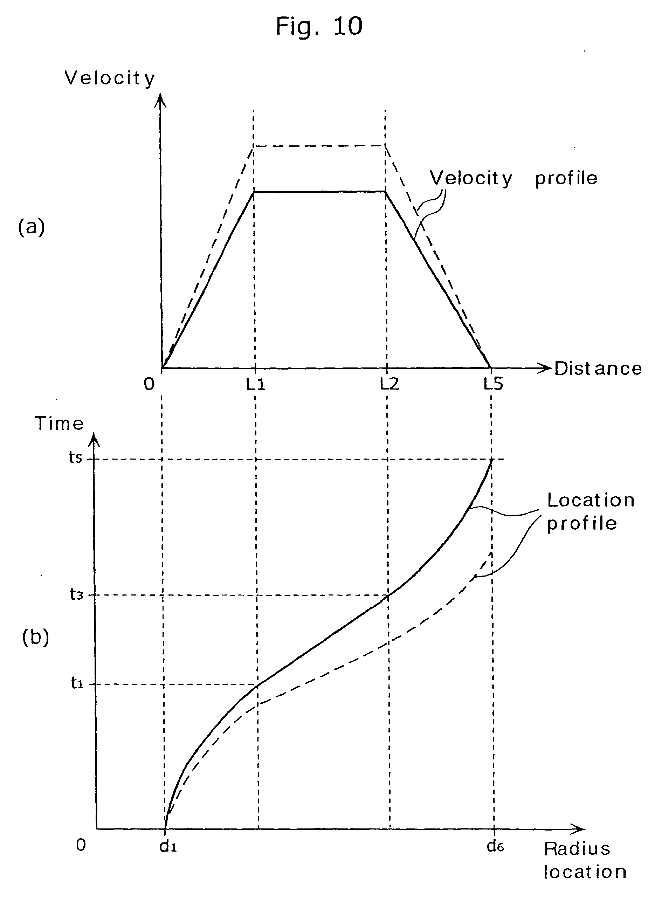

Fig. 10 is an illustration explaining the relation between the traverse gain and the location profile or the velocity profile, Fig. 10, in the case of (a), shows the velocity profile and Fig. 10, in the case of (b), shows the location profile.

For example, the change of the moving velocity generated by the processing of increasing the traverse gain is equal to the change of the moving velocity generated by the processing of adjusting the location profile from the solid line to the dotted line as shown in (b) of Fig. 10, that is, adjusting the velocity profile from the solid line to the dotted line as shown in (a) of Fig. 10.

Also, the traverse control unit 113 can apply an offset on the traverse drive signal. Applying an offset makes the value of a signal obtained as a traverse drive signal by the traverse 111 bigger or smaller, and thus the moving velocity of the optical beam spot to the search direction is adjusted. For example, applying a minus offset makes it possible to decelerate the moving velocity of the optical beam spot to the search target radius location when the search is performed from the outer radius to the inner radius, while applying a plus offset makes it possible to accelerate the moving velocity of the optical beam spot to the search target radius location when the search is performed from the inner radius to the outer radius. As a result, it is possible to maintain the linear velocity of the optical beam spot on the optical disc 1 above the permissible linear velocity.

### (Variation)

Next, a variation of the optical disc apparatus in the above-mentioned example will be explained.

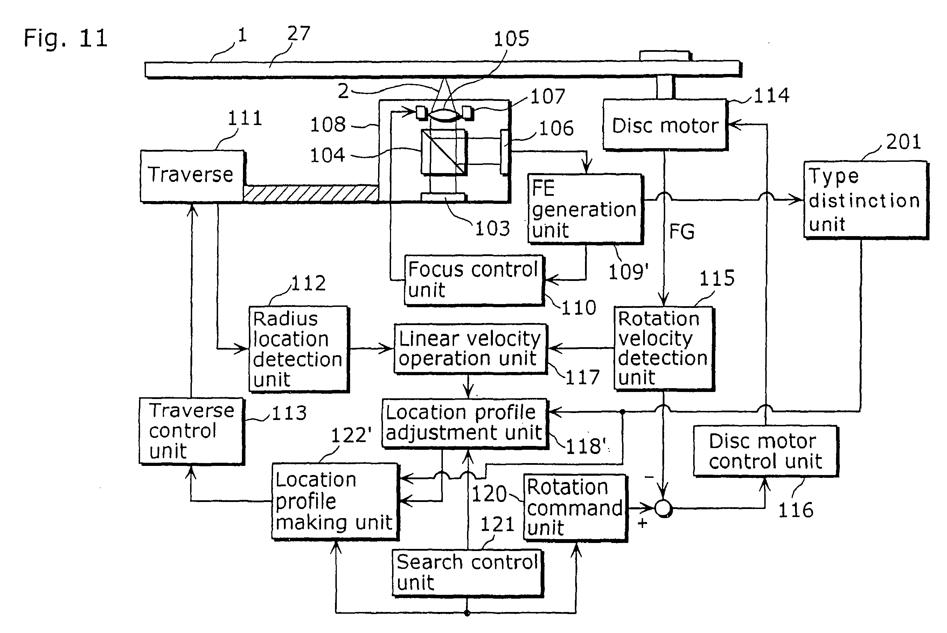

Fig. 11 is a structural diagram showing the structure of the optical disc apparatus concerning the variation.

The optical disc apparatus concerning this variation distinguishes the type of the optical disc 1 and changes the permissible linear velocity according to the type, adjusts the location profile, and has a type distinction unit 201 for distinguishing the type of the optical disc 1.

There are several types of the optical disc 1 such as a Compact Disc (CD), a Digital Versatile Disc (DVD) and a Blu-ray Disc (BD).

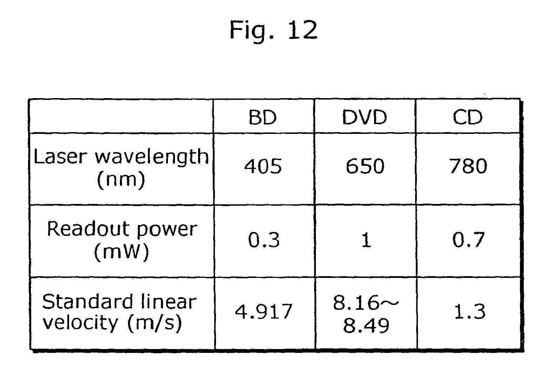

Fig. 12 is an illustration explaining the specifications of the above-mentioned CD, DVD, and BD.

As to a BD, the optimum wavelength (a laser wavelength) of the optical beam 2 to be irradiated is 405 nm, the output (read-out power) of the optical beam 2 necessary for reading out is 0.3 mW, and the standard linear velocity is 4.917 m/s.

As to a DVD, the laser wavelength is 650 nm, the read-out power is 1 mW, and the standard linear velocity is 8.16~8.49 m/s.

As to a CD, the laser wavelength is 780 nm, the read-out power is 0.7 mW, and the standard linear velocity is 1.3 m/s.

Here, the optical beam irradiation unit 103 in the variation changes the wavelength and the output of the optical beam 2 to be irradiated according to the type of the optical disc 1 mentioned above that is inserted into the optical disc apparatus.

The focus control unit 110 controls the focus actuator 107 and moves the convergence lens 105 under the circumstance where the optical beam 2 with a predetermined wavelength is irradiated from the optical beam irradiation unit 103. And the FE generation unit 109' outputs the FE signal corresponding to the moving result of the convergence lens 105.

The type distinction unit 201 obtains the FE signal outputted from the FE generation unit 109', and distinguishes the type of the optical disc 1 inserted into the optical disc apparatus based on the FE signal.

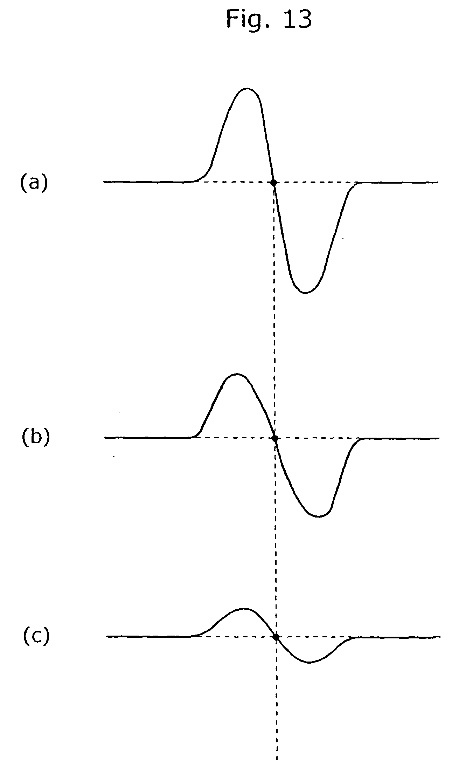

Fig. 13 is a waveform diagram showing the waveform of the FE signal outputted when moving the convergence lens 105.

As mentioned above, the optimum laser wavelengths for a BD, a DVD and a CD differ from each other. For example, when the optical beam 2 whose wavelength is 405 nm from the optical beam irradiation unit 103 is irradiated, the FE generation unit 109' outputs the FE signal with a big amplitude as shown in (a) of Fig. 13 when a BD is inserted into the optical disc apparatus, the FE generation unit 109' outputs the FE signal with an amplitude smaller than the above-mentioned amplitude as shown in (b) of Fig. 13 when a DVD is inserted into the optical disc apparatus, and the FE generation unit 109' outputs the FE signal with an increasingly smaller amplitude as shown in (c) of Fig. 13 when a CD is inserted into the optical disc apparatus.

Also, when the optical beam 2 whose wavelength is 780 nm is irradiated from the optical beam irradiation unit 103, the FE generation unit 109' outputs the FE signal with a small amplitude as shown in (c) of Fig. 13 when a BD is inserted into the optical disc apparatus, the FE generation unit 109' outputs the FE signal with an amplitude bigger than the above-mentioned amplitude as shown in (b) of Fig. 13 when a DVD is inserted into the optical disc apparatus, and the FE generation unit 109' outputs the FE signal with an increasingly bigger amplitude as shown in (a) of Fig. 13 when a CD is inserted into the optical disc apparatus.

The type distinction unit 201 distinguishes the type of the optical disc 1 inserted into the optical disc apparatus based on the amplitude differences of these respective FE signals, and outputs type information showing the distinction result to the location profile adjustment unit 118' and the location profile making unit 122'.

The location profile adjustment unit 118' determines the standard linear velocity and the permissible linear velocity corresponding to the optical disc 1 inserted into the optical disc apparatus based on the type information when obtaining the type information from the type distinction unit 201. And the location profile adjustment unit 118' instructs the location profile making unit 122' to prevent the linear velocity calculated by the linear velocity operation unit 117 from decreasing to the determined permissible linear velocity or below.

The location profile making unit 122' makes a basic location profile corresponding to the optical disc 1 inserted into the optical disc apparatus based on the type information when obtaining the type information from the type distinction unit 201. Also, the location profile making unit 122' adjusts the basic location profile based on the instruction from the location profile adjustment unit 118'.

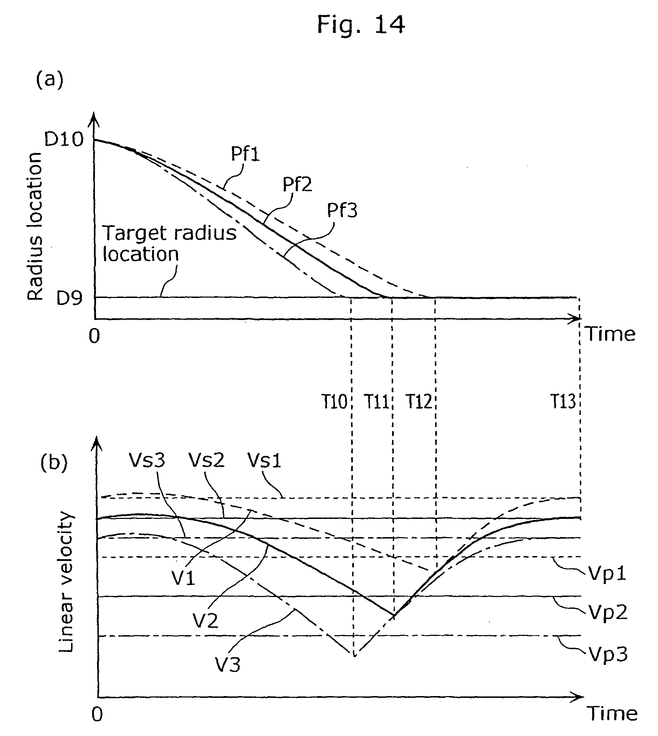

Fig. 14 is a property diagram showing the basic location profile and the linear velocity of the optical beam spot based on the location profile when a search of the optical disc 1 is performed from the outer radius to the inner radius.

As shown in (a) of Fig. 14, the location profile making unit 122' makes a location profile Pf1 as a basic location profile on obtaining the type information showing that the type of the optical disc 1 is a BD from the type distinction unit 201 when a search is performed from the radius location D10 toward the target radius location D9 in the inner radius direction, a location profile Pf2 whose inclination is sharper than that of the location profile Pf1 as a basic location profile, and a location profile Pf3 whose inclination is increasingly sharper than the location profile Pf2 as a basic location profile.

In other words, the location profile making unit 122' makes the location profile Pf1 making the optical beam spot reach to the target radius location D9 at time T12 when the type of the optical disc 1 is a BD, the location profile Pf 2 making the optical beam spot reach to the target radius location D9 at time T11 before passing through time T12 when the type of the optical disc 1 is a DVD, and the location profile Pf3 making the optical beam spot reach to the target radius location D9 at time T10 before passing through time T11 when the type of the optical disc is a CD.

Here, when the type of the optical disc 1 which is inserted into the optical disc apparatus is a BD and the optical beam spot is moved along the location profile Pf1, the linear velocity V1 calculated by the linear velocity operation unit 117 gradually decreases from the standard linear velocity Vs1 at the search starting time, the linear velocity becomes minimum when the optical beam spot reaches to the target radius location D9 at time T12, after that, the linear velocity V1 increases as the rotation velocity of the optical disc 1 increases and then decelerates to the standard linear velocity Vs1 at time T13.

And, the location profile adjustment unit 118' instructs the location profile making unit 122' to adjust the location profile Pf1 so as to prevent the linear velocity V1 from decreasing to the permissible linear velocity Vp1 suitable for a BD or below when obtaining the linear velocity showing the linear velocity V1 mentioned above and the type information showing that the type of the optical disc 1 is a BD.

Also, when the type of the optical disc 1 which is inserted into the optical disc apparatus is a DVD and the optical beam spot is moved along the location profile Pf2, the linear velocity V2 calculated by the linear velocity operation unit 117 gradually decreases from the standard linear velocity Vs2 at the search starting time, the linear velocity becomes minimum when the optical beam spot reaches to the target radius location D9 at time T11, after that, the linear velocity V2 increases as the rotation velocity of the optical disc 1 increases and then decelerates to the standard linear velocity Vs2 at time T13.

And, the location profile adjustment unit 118' instructs the location profile making unit 122' to adjust the location profile Pf2 so as to prevent the linear velocity V2 from decreasing to the permissible linear velocity Vp2 suitable for a DVD or below when obtaining the linear velocity information showing the linear velocity V2 mentioned above and the type information showing that the type of the optical disc 1 is a DVD.

Also, the linear velocity V3 calculated by the linear velocity operation unit 117 gradually decreases from the standard linear velocity Vs3 at the search starting time, becomes minimum when the optical beam spot reaches to the target radius location D9 at time T10, after that, the linear velocity V3 increases as the rotation velocity of the optical disc 1 increases and then decelerates to the standard linear velocity Vs3 at time T13 when the optical beam spot is moved along the location profile Pf3.

And, the location profile adjustment unit 118' instructs the location profile making unit 122' to adjust the location profile Pf3 so as to prevent the linear velocity V3 from decreasing to the permissible linear velocity Vp3 suitable for a CD or below when obtaining the linear velocity information showing the linear velocity V3 mentioned above and the type information showing that the type of the optical disc 1 is a CD.

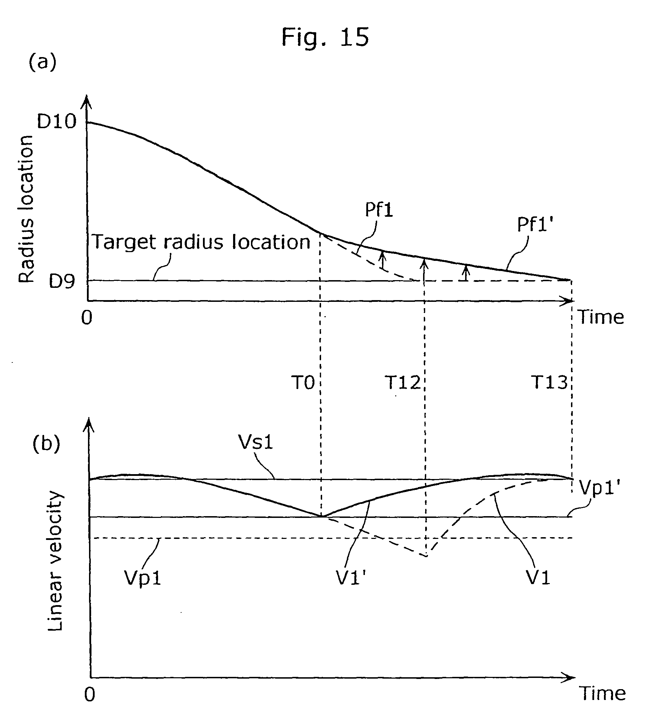

Fig. 15 is an illustration explaining how the location profile is adjusted for a BD as mentioned above.

As mentioned in (b) of Fig. 15, the location profile adjustment unit 118' understands that the linear velocity V1 nears to the permissible linear velocity Vp1, and instructs the linear velocity operation unit 117 to change the location profile Pf1 after time T0 to the location profile Pf1' so as to accelerate the moving velocity of the optical beam spot in the radius direction, in other words, as shown in (a) of Fig. 15, when the linear velocity V1 reaches to the quasi-permissible linear velocity Vp1' at time T0 based on the linear velocity information from the linear velocity operation unit 117. As a result, the location profile making unit 122' adjusts the location profile Pf1 to make the location profile Pf1'.

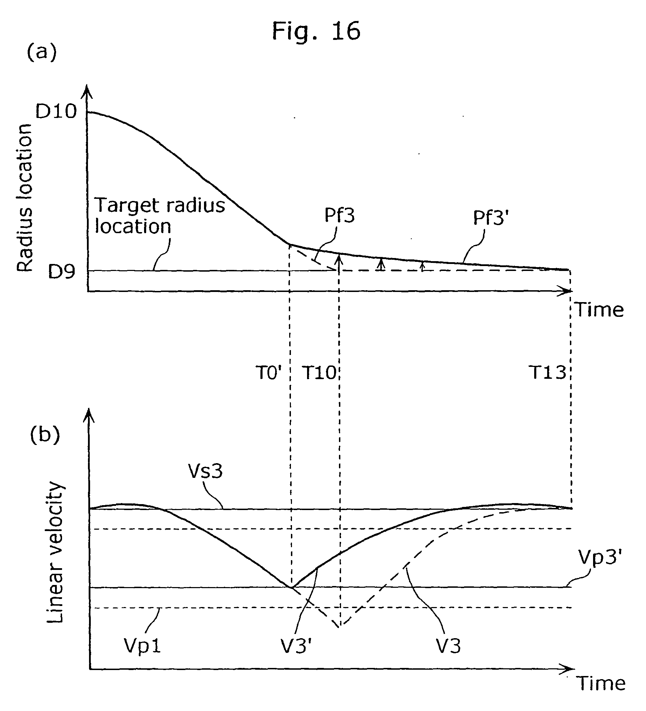

Fig. 16 is an illustration explaining how the location profile is adjusted for a CD as mentioned above.

As mentioned in (b) of Fig. 16, the location profile adjustment unit 118' understands that the linear velocity V3 nears to the permissible linear velocity Vp3, and instructs the linear velocity operation unit 117 to change the location profile Pf3 after time T0' to the location profile Pf3' so as to accelerate the moving velocity of the optical beam spot in the radius direction, in other words, as shown in (a) of Fig. 16, when the linear velocity V3 reaches to the quasi-permissible linear velocity Vp3' at time T0' based on the linear velocity information from the linear velocity operation unit 117. As a result, the location profile making unit 122' adjusts the location profile Pf3 to make the location profile Pf3'.

As mentioned above, the operation of the optical disc apparatus concerning the variation when a search is performed from the outer radius to the inner radius of the optical disc 1 has been explained, likewise, the optical disc apparatus concerning the variation makes a basic location profile suitable for the type of the optical disc and adjusts the location profile based on the permissible linear velocity and the quasi-permissible linear velocity according to the type when a search is performed from the inner radius to the outer radius of the optical disc.

The optical disc apparatus concerning this variation adjusts the location profile according to the type of the optical disc 1 which is inserted into the optical disc apparatus, and thus it is possible to completely prevent reproduced beam deterioration from occurring irrespective of the types of the optical discs.

Also, it is possible to determine the type of the optical disc 1 using another determination method except the one where the type of the optical disc 1 which is inserted into the optical disc apparatus is determined based on the FE signal in the variation.

For example, the type of the optical disc 1 can be judged according to the location of the optical disc information recording surface 27.

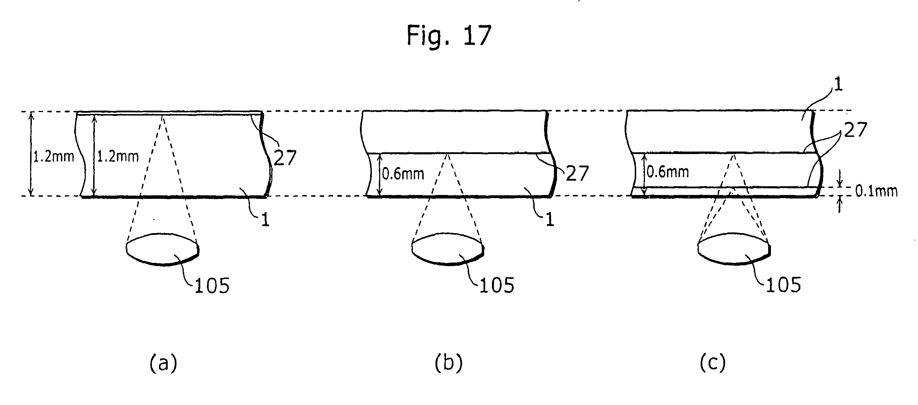

Fig. 17 is a section view of the optical disc 1 showing the location of the optical disc information recording surface 27.

As shown in (a) of Fig. 17, the optical disc information recording surface 27 in a CD is located in 1.2mm below the surface in the convergence lens 105 side of the optical disc 1. As shown in (b) of Fig. 17, the optical disc information recording surface 27 in a DVD is located in 0.6 mm below the surface in the convergence lens 105 side of the optical disc 1. Also, as shown in (c) of Fig. 17, the optical disc information recording surface 27 in a combination disc of a BD and a DVD is located in 0.1 mm and 0.6 mm in thickness from the surface in the convergence lens 105 side of the optical disc 1, the information is recorded on a different optical disc information recording surface 27 according to the contents (such as video data or text data).

In other words, the optical disc apparatus identifies the optical disc 1 which is inserted as any of a combination disc of a BD and a DVD, a DVD or a CD based on the focus distance when adjusting the focus of the optical beam 2 to the optical disc information recording surface 27.

Also, as shown in Fig. 12, it is possible to determine the type of the optical disc 1 based on the read-out power because respective types of the optical disc 1 have a distinctive read-out power.

For example, the optical disc apparatus switches the output of the optical beam 2 to 0.3 mW, 0.7 mW, and then 1 mW, and determines the type of the optical disc 1 which is inserted based on the signal output result. In other words, the optical disc apparatus identifies the type of the optical disc 1 which is inserted as a BD when reading out a signal at the output of 0.3 mW, the optical disc apparatus identifies the type of the optical disc 1 inserted as a CD when a signal is read out at the output of 0.7 mW, and the optical disc apparatus identifies the type of the optical disc 1 inserted as a DVD when a signal is read out at the output of 1 mW.

Here, the optical disc apparatus can determine the type of the optical disc 1 by reading out the read-out power or the standard linear velocity written on the optical disc 1. Note that the read-out power and the standard linear velocity are previously written on the optical disc 1 in order not to cause reproduced beam deterioration unlike the other information recorded on the optical disc 1.

Also, it is possible to determine the type of the optical disc 1 according to the result of the judgment on whether the optical disc 1 is inserted into the optical disc apparatus in a predetermined case by the optical disc apparatus. In other words, a CD is inserted into the optical disc apparatus without being placed in a case, while a BD is inserted into the optical disc apparatus in a case. Therefore, the optical disc apparatus determines the type of the optical disc 1 according to the existence of the case.

Also, the linear velocity of the optical beam spot on the optical disc 1 is calculated from the radius location of the optical beam spot and the rotation velocity of the disc motor 114 in this embodiment and the variation, it is also possible to calculate the linear velocity considering the search direction and the moving velocity of the optical beam spot.

### (Second Example)

The optical disc apparatus in a second example will be explained below with reference to figures.

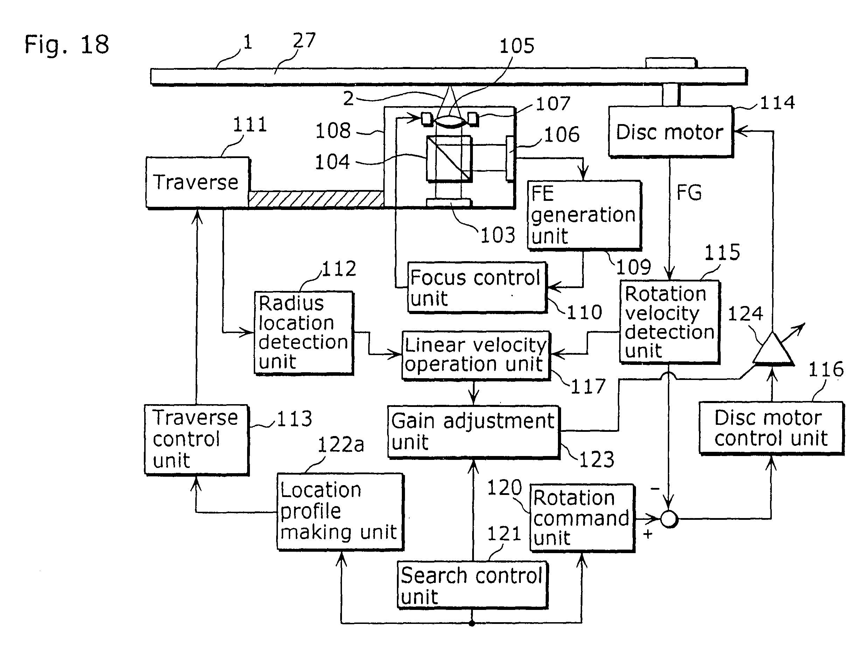

Fig. 18 is a structural diagram showing the structure of the optical disc apparatus in a second example.

This optical disc apparatus is improved in a prevention effect of the reproduced beam deterioration by controlling the rotation velocity of the optical disc, and comprises, similar to the first embodiment, an optical head 108, a traverse 111, a traverse control unit 113, an FE generation unit 109, a focus control unit 110, a rotation command unit 120, a disc motor 114, a rotation speed detection unit 115, a disc motor control unit 116, a radius location detection unit 112, a linear velocity operation unit 117, a search control unit 121, a location profile making unit 122a, a gain adjustment unit 123, and a gain increase unit 124.

Here, the same number assigned to the same unit in the first example is assigned to respective one of the same unit in the function and the structure as the ones in the first example out of the above-mentioned components equipped on the optical disc apparatus in this embodiment and explanations for these units are omitted.

The location profile making unit 122a in the example makes the location profile to be a basic based on the search target radius location information from the search control unit 121.

The gain adjustment unit 123 instructs the gain increase unit 124 to prevent the linear velocity from decreasing to the predetermined value (the permissible linear velocity) during search based on the search radius direction information from the search control unit 121 and the linear velocity information from the linear velocity operation unit 117.

The gain increase unit 124 amplifies the motor drive signal outputted from the disc motor control unit 116 based on the instruction from the gain adjustment unit 123 and outputs the amplified motor drive signal to the disc motor 114. In other words, the gain increase unit 124 adjusts the gain of the motor drive signal outputted from the disc motor control unit 116.

In this example, when the linear velocity is coming to the permissible linear velocity and below, the motor drive signal outputted from the disc motor control unit 116 is amplified and the disc motor 114 accelerates the rotation velocity of the optical disc 1. In this way, as the rotation velocity of the optical disc 1 is increased, it is possible to prevent the linear velocity from decreasing to the permissible linear velocity and below and thus prevent reproduced beam deterioration from occurring.

Here, the control of the disc motor 114 in this example will be explained further.

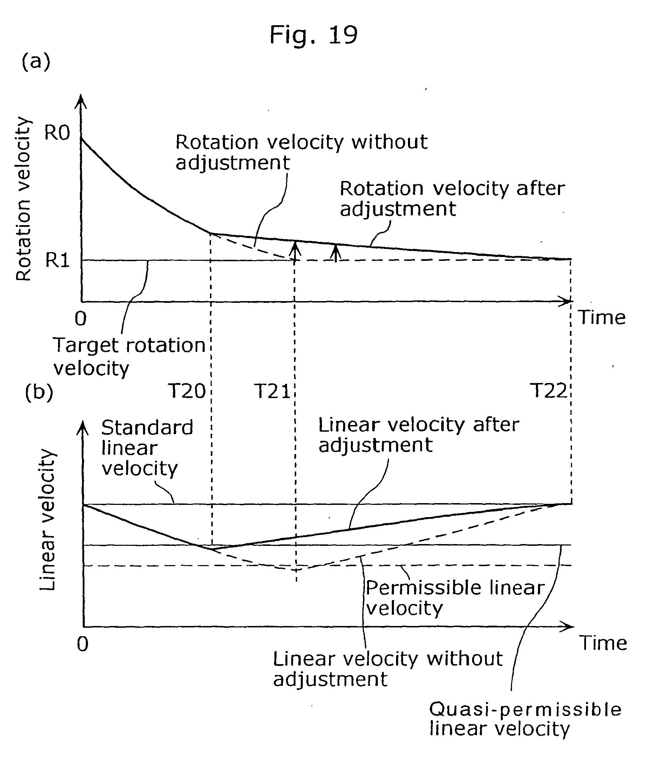

Fig. 19 is a property diagram when a search is performed from the inner radius to the outer radius of the optical disc 1, Fig. 19, in the case of (a), shows the property diagram of the rotation velocity of the optical disc 1, and Fig. 19, in the case of (b), shows the property diagram of the linear velocity of the optical beam spot.

For example, when a search is performed by moving the optical beam spot from the inner radius to the outer radius of the optical disc 1, the search control unit 121, the rotation instruction unit 120, and the disc motor control unit 116 decreases the rotation velocity of the optical disc 1 rotated by the disc motor 114 from velocity R0 to velocity R1 (target rotation velocity) so as to maintain the linear velocity in the inner radius and the outer radius.

Here, for example, when the gain adjustment unit 123 does not give the above-mentioned instruction to the gain increase unit 124, the gain is not adjusted to the motor drive signal from the disc motor control unit 116, as shown by the dotted line in (a) of Fig. 19, the disc motor 114 decreases the rotation velocity of the optical disc 1 from velocity R0 to velocity R1 during the time between time 0 of the search starting time and time T21 before time T22 when the optical beam spot reaches to the target radius location, and the disc motor 114 maintains the rotation velocity at velocity R1.

However, in this case, as shown by the dotted line in (b) of Fig. 19, the linear velocity gradually decreases from the standard linear velocity in response to the decrease of the rotation velocity of the optical disc 1 from time 0 of the search starting time and becomes slower than the permissible linear velocity at time T21. In other words, in this case, reproduced beam deterioration may occur in the conventional example.

However, in the present example, the gain adjustment unit 123 gives the above-mentioned instruction to the gain increase unit 124 based on the linear velocity calculated by the linear velocity operation unit 117 and the motor drive signal outputted from the disc motor control unit 116 is amplified by the gain increase unit 124 and supplied to the disc motor 114, as shown by the solid line in (a) of Fig. 19, which leads to holding down the decreasing rotation velocity of the optical disc 1, and as a result, as shown by the solid line in (b) of Fig. 19, the linear velocity is maintained above the permissible linear velocity and thus it is possible to prevent reproduced beam deterioration from occurring.

In other words, when judging that the linear velocity decreases to the quasi-permissible linear velocity or below at time T20, the gain adjustment unit 123 instructs the gain increase unit 124 to amplify the motor drive signal. In other words, the gain increase unit 124 amplifies the motor drive signal outputted from the disc motor control unit 116 and outputs the motor drive signal to the disc motor 114. In this way, the disc motor 114 slows the decrease of the rotation velocity of the optical disc 1 after time T20, and makes the rotation velocity velocity R1 that is a target rotation velocity at time T22 when the optical beam spot reaches to the search target radius location. As a result, the linear velocity reaches to the standard linear velocity at time T22 after gradually rising and keeping above the permissible linear velocity after time T20 when the linear velocity decreased to the one below the quasi-permissible linear velocity.

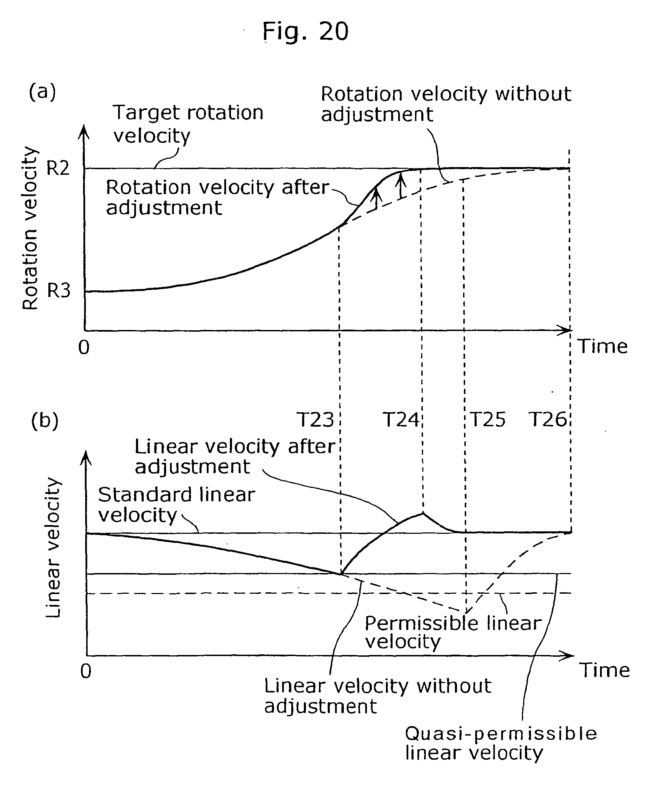

Fig. 20 is a property diagram when a search is performed from the outer radius to the inner radius of the optical disc 1, Fig. 20, in the case of (a), shows a property diagram of the rotation velocity of the optical disc 1, and Fig. 20, in the case of (b), shows a property diagram of the linear velocity of the optical beam spot.

For example, when a search is performed by moving the optical beam spot from the outer radius to the inner radius of the optical disc 1, the search control unit 121, the rotation instruction unit 120, and the disc motor control unit 116 increases the rotation velocity of the optical disc 1 rotated by the disc motor 14 from velocity R3 to velocity R2 as a target so as to maintain the linear velocity in the outer radius and in the inner radius.

Here, for example, any gain adjustment on the motor drive signal from the disc motor control unit 116 is not performed when the gain adjustment unit 123 does not give the above-mentioned instruction to the gain increase unit 124, as shown by the dotted line in (a) of Fig. 20, the disc motor 114 increases the rotation velocity of the optical disc 1 from velocity R3 to velocity R2 during the time from time 0 at the search starting time to time T26 after time T25 when the optical beam spot reaches to the target radius location.

However, in this case, as shown by the dotted line in (b) of Fig. 20, the linear velocity decreases from the search starting time of time 0 from the standard linear velocity in response to a movement into the inner radius direction of the optical beam spot by the traverse 111, and the linear velocity falls down to the slowest velocity that is slower than the permissible linear velocity just before the rotation velocity reaches to the target rotation velocity R2 and at time T25 when the optical beam spot reaches to the search target radius location. In other words, in this case, reproduced beam deterioration may occur like the conventional example. After time T25 when the traverse 111 stopped moving the optical beam spot to the radius direction, the linear velocity rises as the rotation velocity rises and reaches to the standard linear velocity at time T26.

However, in this example, as the gain adjustment unit 123 gives the above-mentioned instruction to the gain increase unit 124 based on the linear velocity calculated by the linear velocity operation unit 117, and the drive signal outputted from the disc motor control unit 116 is amplified by the gain increase unit 124 and supplied to the disc motor 114, as shown by the dotted line in (a) of Fig. 20, the rotation velocity of the optical disc 1 is accelerated, and as a result, as shown by the solid line in (b) of Fig. 20, the linear velocity is maintained above the permissible linear velocity and it is possible to prevent reproduced beam deterioration from occurring.

In other words, the gain adjustment unit 123 instructs the gain increase unit 124 to amplify the drive signal when judging that the linear velocity decreased to the one below the quasi-permissible linear velocity at time T23. When receiving this instruction, the gain increase unit 124 adjusts the gain. In other words, the gain increase unit 124 amplifies the motor drive signal outputted from the disc motor control unit 116 and outputs the gain to the disc motor 114. In this way, the disc motor 114 sharply increases the rotation velocity of the optical disc 1 after time T23, and makes the rotation velocity velocity R2 that is a target rotation velocity at time T22 when the optical beam spot reaches to the search target radius location at time T24 before the optical beam spot reaches to the search target radius location. As a result, the linear velocity gradually increases from time T23 and reaches to the maximum at time T24. And the linear velocity gradually decreases as the traverse 111 moves the optical beam spot to the radius direction and maintains the linear velocity at the standard linear velocity after time T25.

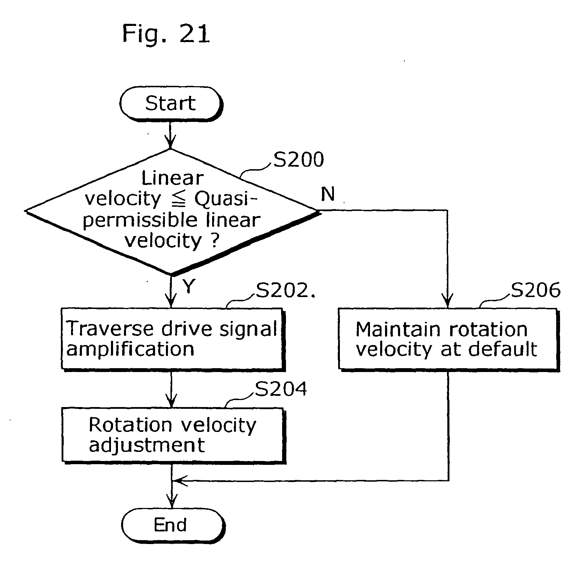

Fig. 21 is a flow chart showing the operation of the optical disc apparatus in this example.

First, the optical disc apparatus judges whether the linear velocity is not more than the quasi-permissible linear velocity (step S200). And, when the linear velocity is judged to be not more than the quasi-permissible linear velocity (step S200 Y), the optical disc apparatus amplifies the motor drive signal (step S202), and adjusts the rotation velocity of the optical disc 1 (step S204). In other words, the optical disc apparatus slows the decrease of the rotation velocity of the optical disc 1 when searching from the inner radius to the outer radius, and sharply increases the rotation velocity of the optical disc 1 when searching from the outer radius to the inner radius.

In other words, when the linear velocity is judged to be not less than the quasi-permissible linear velocity (step S200 N), the optical disc apparatus does not perform amplification processing on the motor drive signal and maintains the rotation velocity of the optical disc 1 under the default condition (step S206).

In this way, this example makes it possible to prevent reproduced beam deterioration from occurring even when some vibration is added to the traverse mechanism under search because reproduced beam deterioration is avoided by adjusting the rotation velocity of the optical disc 1 by the disc motor 14 and further, avoid the difficulty in controlling the focus location instead of avoiding reproduced beam deterioration by adjusting the focus of the optical beam 2 like the conventional example. Further, it is also possible to completely prevent reproduced beam deterioration from occurring without any limitation on the output range of the FE signal.

Also, in the present example, it is possible to prevent reproduced beam deterioration from occurring without decreasing the search velocity because the location profile is not adjusted like in the first example.

In this example, the gain increase unit 124 amplifies the motor drive signal from the disc motor control unit 116 based on the instruction of the gain adjustment unit 123, the disc motor control unit 116 can apply an offset to the motor drive signal.

In this case, the disc motor 114 increases the rotation velocity of the optical disc 1 according to the additional offset when a search is performed from the outer radius to the inner radius, while the disc motor 114 decreases the rotation velocity of the optical disc 1 according to the additional offset predetermined as the target rotation velocity when a search is performed from the inner radius to the outer radius. As a result, it is possible to maintain the linear velocity of the optical beam spot on the optical disc 1 above the permissible linear velocity.

Also, the disc motor control unit 116 may adjust the target rotation velocity. In this case, the target rotation velocity is adjusted to a relatively high velocity until the optical beam spot reaches to the target radius location, and the rotation velocity of the optical disc is set to the target rotation velocity corresponding to the target radius location after the optical beam spot reaches to the target radius location.

In this case, the increase in the rotation velocity of the optical disc 1 by the disc motor 114 increases by the additional velocity predetermined as the target rotation velocity when a search is performed from the outer radius to the inner radius, while the decrease of the rotation velocity of the optical disc 1 by the disc motor 114 decreases by the additional velocity predetermined as the target rotation velocity when a search is performed from the inner radius to the outer radius. As a result, the linear velocity of the optical beam spot on the optical disc 1 is maintained faster than the permissible linear velocity.

Also, the first example can be combined with this embodiment. In other words, it is possible to perform finer control by convertibly controlling the rotation velocity of the optical disc 1 by the disc motor 114 and the moving velocity of the optical beam spot by the traverse 111.

For example, as shown in (c) of Fig. 17, the rotation velocity of the optical disc 1 and the moving velocity of the optical beam spot are convertibly controlled according to the location of the optical disc information recording surface 27 of the optical disc 1 or the detail of the contents stored on the optical disc 1.

In this way, it is possible to completely prevent reproduced beam deterioration from occurring and improve the user-friendliness.

Note that it is also possible to adjust the gain of the motor drive signal outputted from the disc motor control unit 116 according to the type by judging the type of the optical disc 1 inserted into the optical disc apparatus also in this example like the variation of the first example.

### (Embodiment of the invention)

The optical disc apparatus in the embodiment of the present invention will be explained below with reference to figures.

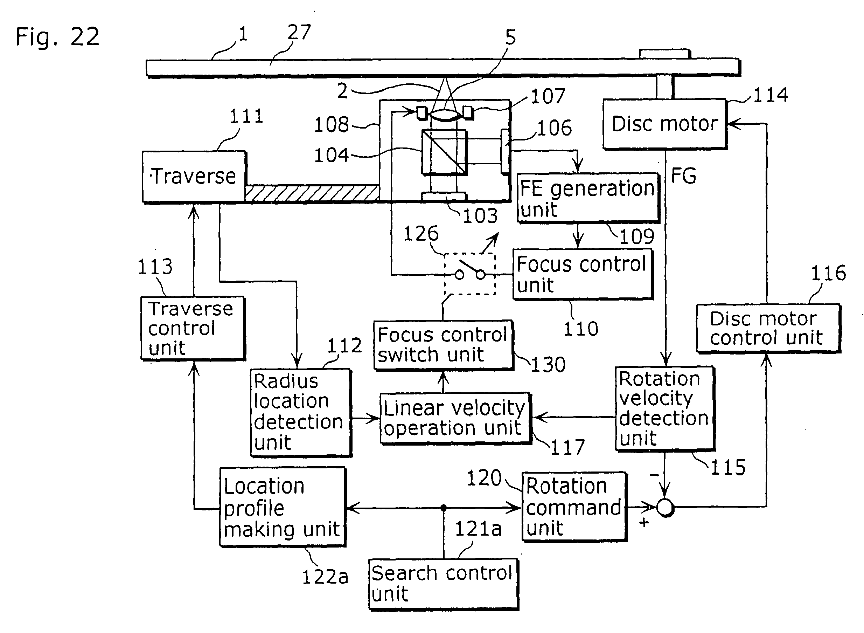

Fig. 22 is a structural diagram showing the structure of the optical disc apparatus in the third embodiment of the present invention.

This optical disc apparatus is improved in a prevention effect of the reproduced beam deterioration by prohibiting the focus control of the optical beam 2, and comprises, similar to the first embodiment, the optical head 108, the traverse 111, the traverse control unit 113, the FE generation unit 109, the focus control unit 110, the rotation command unit 120, the disc motor 114, the rotation speed detection unit 115, the disc motor control unit 116, the radius location detection unit 112, the linear velocity operation unit 117, a search control unit 121a, a location profile making unit 122a, a focus control switch unit 130, and a selector switch 126.

Here, the same number assigned to the same unit in the first example is assigned to respective one of the same unit in the function and the structure as the ones in the first example out of the above-mentioned components equipped on the optical disc apparatus in this embodiment and explanations for these units are omitted.

The search control unit 121a in the present embodiment outputs only search target radius information to the location profile making unit 122a and the rotation instruction unit 120 without outputting search radius direction information as the search control unit 121 in the first or the second example.

The location profile making unit 122a makes the location profile to be a basic shown in Fig. 4 or Fig. 5 based on the search target radius location information from the search control unit 121.

The focus control switch unit 130 determines the linear velocity of the optical beam spot based on the linear velocity information from the linear velocity operation unit 117, outputs a disconnect signal for disconnecting the focus control unit 110 from the focus actuator 107 when the linear velocity is not more than the predetermined velocity (the quasi-permissible linear velocity) to the selector switch 126, and outputs a connection signal for connecting the focus control unit 110 with the focus actuator 107 when the linear velocity is slower than the quasi-permissible linear velocity.

The selector switch 126 connects the focus control unit 110 with the focus actuator 107 and executes the focus control of the focus actuator 107 by the focus control unit 110 on obtaining the connection signal from the focus control switch unit 130. On the other hand, the selector switch 126 disconnects the focus control unit 110 from the focus actuator 107 and finishes the focus control of the focus actuator 107 by the focus control unit 110 on obtaining the disconnection signal from the focus control switch unit 130.

Here, the quasi-permissible linear velocity is set for the focus control switch unit 130 as the velocity faster than the permissible linear velocity.

The focus control switch unit 130 in the present embodiment outputs a connection signal when the linear velocity becomes faster than the quasi-permissible linear velocity and a disconnection signal when the linear velocity becomes slower than the quasi-permissible linear velocity, but it is possible to previously outputs a connection signal so that the focus control is turned on when the linear velocity becomes faster than the quasi-permissible linear velocity or a disconnection signal so that the focus control is turned off when the linear velocity becomes slower than the quasi-permissible linear velocity considering the time when the focus control is turned on or turned off after the signal is outputted.

When the focus control is turned off as mentioned above, the area of the optical beam spot of the optical beam 2 which is irradiated by the optical head 108, on the optical disc information recording surface 27 of the optical disc 1 becomes greater than the one when the focus control is turned on.

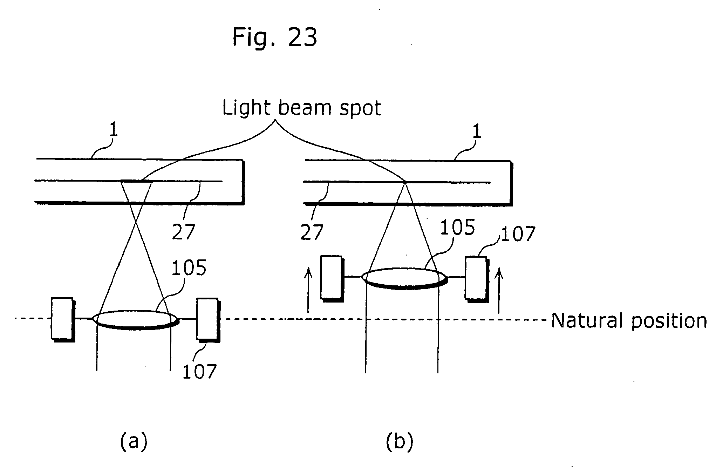

Fig. 23 is an illustration explaining how the area of the optical beam spot changes, Fig. 23, in the case of (a), shows the condition of the focus control being turned off, and Fig. 23, in the case of (b), shows the condition where the focus control is turned on.

As shown in (b) of Fig. 23, the focus actuator 107 moves the convergence lens 105 based on the control from the focus control unit 110 to the optical disc 1 side from the natural condition and puts the focus of the optical beam 2 on the optical disc information recording surface 27 of the optical disc 1 when the focus control is turned on. As a result, the area of the optical beam spot on the optical disc information recording surface 27 becomes very narrow.

However, the focus actuator 107 returns the convergence lens 105 to the natural condition as shown in (a) of Fig. 23 when the focus control is turned off. As a result, the focus of the optical beam 2 moves away from the optical disc 1 forward and the area of the optical beam spot becomes very big.

However, the distance between the focus and the optical disc information recording surface 27 is longer enough than the distance when the offset signal is outputted in the conventional example, it is possible to prevent the location of the beam focus from being put on the optical disc information recording surface 27.

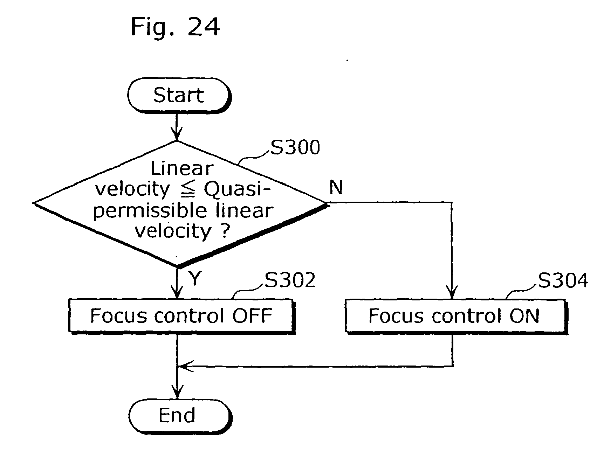

Fig. 24 is a flow chart showing the operation of the optical disc apparatus in the present invention.

First, the optical disc apparatus judges whether the linear velocity is not more than the quasi-permissible linear velocity (step S300). And, when the linear velocity is not more than the quasi-permissible linear velocity (step S300 Y), the optical disc apparatus turns off the focus control (step S302). On the other hand, when the linear velocity is judged to be not less than the quasi-permissible linear velocity (step S300 N), the optical disc apparatus turns on the focus control (step S304).

This embodiment prevents reproduced beam deterioration from occurring by stopping the focus control in stead of preventing reproduced beam deterioration from occurring by controlling the focus of the optical beam 2 using an offset signal like the conventional example, and thus it is possible to prevent reproduced beam deterioration from occurring triggered by vibration of the traverse mechanism during search, prevent the difficulty in controlling the focus location, and further, sufficiently prevent the reproduced beam deterioration from occurring without limiting the output range of the FE signal.

### Industrial Applicability

The optical disc apparatus concerning the present invention is suitable for an audio video (AV) which reads out data from a CD and a DVD and reproduces music and video or an optical disc drive which is built in a personal computer and the like.

## Claims

1. An optical disc apparatus for reading out information recorded on an optical disc (1) by irradiating an optical beam (2) on the optical disc, comprising:
a focus adjustment unit (109,110) operable to adjust a focus of the optical beam so that the focus is formed on the optical disc;
a rotation unit (114,116) operable to rotate the optical disc;
a moving unit (111,113) operable to move a spot where the optical beam is irradiated on the optical disc in a radius direction of the optical disc;
a linear velocity detection unit (112,115,117) operable to detect a linear velocity of the spot;
a rotation control unit (116, 120) operable to control the rotation unit so that the linear velocity detected by the linear velocity detection unit remains substantially constant on an arbitrary radius location on the optical disc when information recorded on the optical disc is read out; and
**characterised by**
a focus adjustment stop unit (126, 130) operable to stop a focus adjustment made by the focus adjustment unit in the case where the linear velocity detected by the linear velocity detection unit decreases to a predetermined linear velocity or below, when the moving unit moves the spot.

## Patentansprüche

1. Optische-Platten-Vorrichtung zum Auslesen von Informationen, die durch Bestrahlen einer optischen Platte (1) mit einem optischen Strahl (2) auf die optische Platte (1) aufgezeichnet worden sind, mit:
einer Brennpunkt-Einstelleinheit (109, 110), die so betreibbar ist, dass sie einen Brennpunkt des optischen Strahls so einstellt, dass der Brennpunkt auf der optischen Platte erzeugt wird;
einer Dreheinheit (114, 116), die so betreibbar ist, dass sie die optische Platte dreht;
einer Verschiebungseinheit (111, 113), die so betreibbar ist, dass sie einen Punkt, an dem der optische Strahl auf der optischen Platte auftrifft, in einer radialen Richtung der optischen Platte verschiebt;
einer Lineargeschwindigkeits-Ermittlungseinheit (112, 115, 117), die so betreibbar ist, dass sie eine Lineargeschwindigkeit des Punkts ermittelt; und
einer Drehsteuereinheit (116, 120), die so betreibbar ist, dass sie die Dreheinheit so steuert, dass die von der Lineargeschwindigkeits-Ermittlungseinheit ermittelte Lineargeschwindigkeit an einer beliebigen Radiusstelle auf der optischen Platte im Wesentlichen konstant bleibt, wenn auf der optischen Platte aufgezeichnete Informationen ausgelesen werden,
**gekennzeichnet durch** eine Brennpunkteinstellungs-Unterbrechungseinheit (126, 130), die so betreibbar ist, dass sie eine von der Brennpunkt-Einstelleinheit vorgenommene Brennpunkteinstellung in dem Fall unterbricht, dass die von der Lineargeschwindigkeits-Ermittlungseinheit ermittelte Lineargeschwindigkeit auf eine vorgegebene Lineargeschwindigkeit oder darunter absinkt, wenn die Verschiebungseinheit den Punkt verschiebt.

## Revendications

1. Dispositif de disque optique destiné à lire des informations enregistrées sur un disque optique (1) en faisant rayonner un faisceau optique (2) sur le disque optique, comprenant :
une unité de réglage de focalisation (109, 110) pouvant être mise en oeuvre pour régler un point de focalisation du faisceau optique de sorte que le point de focalisation est formé sur le disque optique,
une unité de rotation (114, 116) pouvant être mise en oeuvre pour faire tourner le disque optique,
une unité de déplacement (111, 113) pouvant être mise en oeuvre pour déplacer une trace où le faisceau optique est amené à rayonner sur le disque optique dans une direction du rayon du disque optique,
une unité de détection de vitesse linéaire (112, 115, 117) pouvant être mise en oeuvre pour détecter une vitesse linéaire de la trace,
une unité de commande de rotation (116, 120) pouvant être mise en oeuvre pour commander l'unité de rotation de sorte que la vitesse linéaire détectée par l'unité de détection de vitesse linéaire reste globalement constante sur un emplacement de rayon arbitraire sur le disque optique lorsque les informations enregistrées sur le disque optique sont lues, et
**caractérisé par**
une unité d'arrêt d'ajustement de focalisation (126, 130) pouvant être mise en oeuvre pour arrêter un réglage de focalisation réalisé par l'unité de réglage de focalisation dans le cas où la vitesse linéaire détectée par l'unité de détection de vitesse linéaire diminue à une vitesse linéaire prédéterminée ou en dessous, lorsque l'unité de déplacement déplace la trace.
